# EUROPÄISCHE PATENTSCHRIFT

(11) **EP 3 516 636 B1**
(45) Veröffentlichungstag und Bekanntmachung des Hinweises auf die Patenterteilung: **05.08.2020**
(21) Anmeldenummer: 17771762.6
(22) Anmeldetag: 22.09.2017
(51) Int. Cl.: G08B 21/04

(54) **AUDIOÜBERWACHUNGSSYSTEM**
AUDIO MONITORING SYSTEM
DISPOSITIF DE SURVEILLANCE AUDIO

(30) Priorität: 23.09.2016 CH 12422016
(43) Veröffentlichungstag der Anmeldung: 31.07.2019
(73) Patentinhaber: Caru AG, 8008 Zürich (CH)
(72) Erfinder: HELBLING, Thomas, 8500 Frauenfeld Schweiz (CH); DRÖSCHER, Susanne, 8004 Zürich (CH)
(74) Vertreter: Schneider Feldmann AG Patent- und Markenanwälte
(86) Internationale Anmeldenummer: PCT/EP2017/074098
(87) Internationale Veröffentlichungsnummer: WO 2018/055110

(56) Entgegenhaltungen:
- WO-A1-99/06979
- WO-A1-2016/014855
- DE-A1- 3 830 655
- JP-A- 2003 242 569

## Beschreibung

### Technisches Gebiet

Die vorliegende Erfindung beschreibt ein Überwachungsverfahren für eine überwachte Person mittels mindestens einer Überwachungselektronik in einem Raum, wobei die Überwachungselektronik eine Freisprecheinrichtung und mindestens ein Audiomodul umfasst, sodass Audiosignale der überwachten Person erfasst und ausgewertet werden können und bei Erfassung eines Ereignisses eine Kommunikationsverbindung mit mindestens einer externen Hilfsperson aufbaubar ist.

Ein Überwachungssystem bestehend aus mindestens einer Überwachungselektronik, die zentral in einer geschlossenen Umgebung (z.B. Wohnumgebung) aufgestellt wird. Diese Überwachungselektronik detektiert akustische Signale und weitere Raumparameter wie beispielsweise Temperatur, CO2, Druck. Das akustische Signal wird durch Methoden der Spracherkennung analysiert. Bei Erkennen von akustischen Ereignissen oder Sprachelementen, die auf eine Notsituation hinweisen, wird ein Alarm ausgelöst. Der ausgelöste Alarm informiert zunächst innerhalb der geschlossenen Umgebung und kann quittiert werden. Falls innerhalb einer bestimmten Zeit keine Quittierung erfolgt, wird eine externe Hilfsperson alarmiert. Die externe Hilfsperson kann mit der in Not geratenen überwachten Person über eine Freisprecheinrichtung in Kontakt treten.

### Stand der Technik

Immer mehr Menschen leben alleinstehend oder sind für eine gewisse Zeitspanne alleine in einer geschlossenen Umgebung, obwohl sie gesundheitlich oder altershalber eingeschränkt sind.

Verschiedene Systeme sind bekannt, über welche für ältere oder kranke Personen, Kinder oder Babies oder Tiere, oder allgemein Menschen in Notsituationen Hilfe alarmiert werden kann. Notsituationen können durch einen Sturz, eine Verletzung, Immobilität, Schwächeanfall, andere akute medizinische Beschwerden oder auch durch Rauchentwicklung, Brand, Gasaustritt, Wasserschaden oder eine Bedrohung durch andere Lebewesen (z.B. ein Einbruch, Verletzung durch Haustier) entstehen.

Es gibt am Körper getragene mobile Geräte, welche physiologische Signale aufzeichnen und beim Erkennen einer Gefahr ein Alarm ausgelöst wird oder andere bei denen aktiv ein Alarm ausgelöst werden kann. Mobile Geräte können aus einem Sensor bestehen wie zum Beispiel einem Notrufknopf oder aus einem kompletten System wie beispielsweise Smartwatch oder Mobiltelefon.

Andererseits gibt es stationäre Systeme, die über verteilte oder zentrale Sensoren in einer geschlossenen Umgebung physiologische oder nicht-physiologische Signale aufnehmen und eine Gefahrensituation erkennen können und basierend darauf einen Alarm auslösen können.

Stationäre Systeme können entweder fix installiert sein wie beispielsweise an der Decke, in oder an einer Wand oder im respektive auf dem Boden. Andere Systeme sind stationär aufgestellt, können jedoch jederzeit an eine andere Position verschoben werden. Um beispielsweise eine Wohnung hinreichend zu überwachen, muss meist in jedem Raum Sensorik installiert sein.

Stationären Systeme arbeiten häufig mit verteilten Sensoren, welche an Türen, Fenstern, Kühlschrank, Bett, Decke, Wände, in der Dusche, in der Küche beim Kochherd oder Pillenboxen montiert sind. Die Installation und Wartung solcher Sensoren ist aufwändig. Die verteilten Sensoren kommunizieren wireless oder über Kabelverbindungen und sind batteriebetrieben oder mit dem stationären Stromnetz verbunden. Dabei zeichnen die Sensoren nicht-physiologische Signale auf wie Temperatur, Druck, Feuchtigkeit, Rauch, verschiedene Gase in der Luft wie CO2, Bewegung, Helligkeit oder nehmen kontinuierlich Kamerabilder auf, womit die Privatsphäre einer überwachten Person stark eingeschränkt wird.

Es sind verschiedene Methoden der Detektierung eines Notfalls bekannt. Überwachte Personen lösen in einem Fall einen Alarm durch aktive Interaktion (z.B. Knopfdruck oder Sprachbefehl) aus, während in einem anderen Fall ein Notfall ohne das aktive Zutun der überwachten Person über die Auswertung verschiedener Sensorsignale detektiert wird. Die weitgehend automatisierte Erkennung von Notfällen weist grosse Vorteile auf, ist aber mit einer erhöhten Anzahl von Fehlalarmen verbunden.

EP 1371043 beschreibt ein stationäres System. Das System zeichnet Bild- oder Audiodaten der überwachten Umgebung kontinuierlich auf, speichert eine gewisse Zeitspanne ab und klassifiziert sie. Wird aufgrund der Klassifizierung ein Notfall ermittelt, wird automatisch eine externe Hilfsperson alarmiert. Mit dem Alarm werden Daten von vor dem Eintreffen des Ereignisses an diese Hilfsperson übermittelt, wobei die Daten aus Audio-, Video- und/oder Bildinformationen, vor dem Eintritt des Ereignisses aufgezeichnet, bestehen.

Um dem alarmauslösenden Ereignis vorausgehende Daten versenden zu können, müssen die Sensorsignale kontinuierlich aufgenommen und im System gespeichert werden. Im Hinblick auf den Schutz der Privatsphäre ist dies bedenklich. Dadurch, dass aufgezeichnete Daten von vor dem Ereignis versendet werden, kann die überwachte Person keinen aktiven Einfluss auf die Informationen nehmen, die übermittelt werden. Zudem kann die Empfängerseite nicht einschätzen, wie sich die Situation nach dem Ereignis entwickelt hat. Die automatische Klassifizierung von Ereignissen durch Algorithmen führt zu Fehlalarmen. Diese Fehlalarme können von der überwachten Person nicht überwacht und gesteuert werden.

Das Dokument WO 99/06979 offenbart die Audioüberwachung von Personen in einer Wohnumgebung.

### Darstellung der Erfindung

Die vorliegende Erfindung hat sich zur Aufgabe gestellt ein Überwachungsverfahren für eine überwachte Person mittels mindestens einer Überwachungselektronik in einem Raum zu schaffen, welches eine verringerte Fehlalarmrate aufweist und auf eine kontinuierliche Aufzeichnung von Audio- und/oder Videosignalen verzichtet.

Dazu sollte ein einfach zu installierendes und wartungsarmes stationär betriebene Überwachungselektronik geschaffen werden, welche ohne verteilte batteriebetriebene Sensoren auskommt, welche nicht am Körper getragen wird und welche durch GeräuschKlassifizierung und Spracherkennung Notsituationen automatisch erkennt und einen automatischen Alarm erzeugt und versendet.

Es war weiter die Aufgabe, ein Überwachungssystem bereitzustellen, welches Geräuschquellen auch außerhalb des aufgestellten Raum erkennen kann, so dass nicht jeder Raum ein eigenes System benötigt.

Ausserdem war es die Aufgabe der Erfindung ein Alarmierverfahren bereitzustellen, welches Fehlalarme durch eine überwachte Person abfangen lässt und es ermöglicht, Audiodaten losgelöst von einer direkten Telefonverbindung zu einer externen Hilfsperson zu versenden. Durch dieses Alarmierverfahren wird erfindungsgemäß die Fehlalarmrate reduziert und die externe Hilfsperson erhält die Informationen in einer Audiodatei unabhängig davon, ob sie telefonisch zum Zeitpunkt eines Notfalls erreichbar ist. Dadurch wird der Stress der Angehörigen reduziert.

Weiter war es die Aufgabe der Erfindung die Privatsphäre der überwachten Person besser zu schützen, indem keine Daten aufgezeichnet und versendet werden, welche zeitlich vor dem alarmauslösenden Ereignis liegen.

Die Erfindung ist durch die unten angegebenen Ansprüche definiert.

### Kurze Beschreibung der Abbildungen

Bevorzugte Ausführungsbeispiele des Erfindungsgegenstandes eines Audioüberwachungssystems, sowie eines Verfahrens zur Überwachung und Alarmierung werden nachstehend im Zusammenhang mit den beiliegenden Abbildungen beschrieben.
Abbildung 1: Schematik der Anordnung mehrerer Sensoreinheiten entsprechend einer der möglichen Ausführungen der Erfindung.
Abbildung 2: Skizze der Hardwarekomponenten und deren Vernetzung, die eine der beschriebenen Ausführungen der Erfindung ermöglichen.
Abbildung 3: Flussdiagramm des gesamten Überwachungsverfahrens wie in einer der Ausführungen der Erfindung beschrieben.
Abbildungen 4a bis 4c: Flussdiagramme und zeitliche Abfolge der einzelnen Schritte des Überwachungsverfahrens bei Eintreffen eines Ereignisses.

### Beschreibung

Das System besteht aus mindestens einer Überwachungselektronik 131, welche hier auch als Master bezeichnet wird, mit mindestens einer Freisprecheinrichtung 230 welche aus mindestens einem Audio-Empfänger 234 und einem Lautsprecher 232 besteht sowie einer Datenverarbeitungseinheit 250 und einem Kommunikationsmodul 282, 284, die in einem überwachten Raum 130 aufgestellt wird.

Die Überwachungselektronik 131 detektiert und analysiert Audiodaten und Umweltdaten der Umgebung und klassifiziert diese. Fällt ein Geräusch in eine vorher definierte Klasse, so handelt es sich um ein Triggersignal 301 und es wird ein lokaler Alarm ausgegeben 402. Die überwachte Person hat die Möglichkeit, diesen Alarm innerhalb eines definierten Zeitraums zu quittieren. Weiter wird mit Eintreffen des Triggersignals 301 eine Audioaufzeichnung 401 gestartet. Bei Ausbleiben der Quittierung wird nach Ablauf eines Quittierzeitraums 532 ein erster Teil einer Audioaufzeichnung 524 versandt und eine Sprachverbindung mit einer externen Hilfsperson aufgebaut 460.

### Hardware

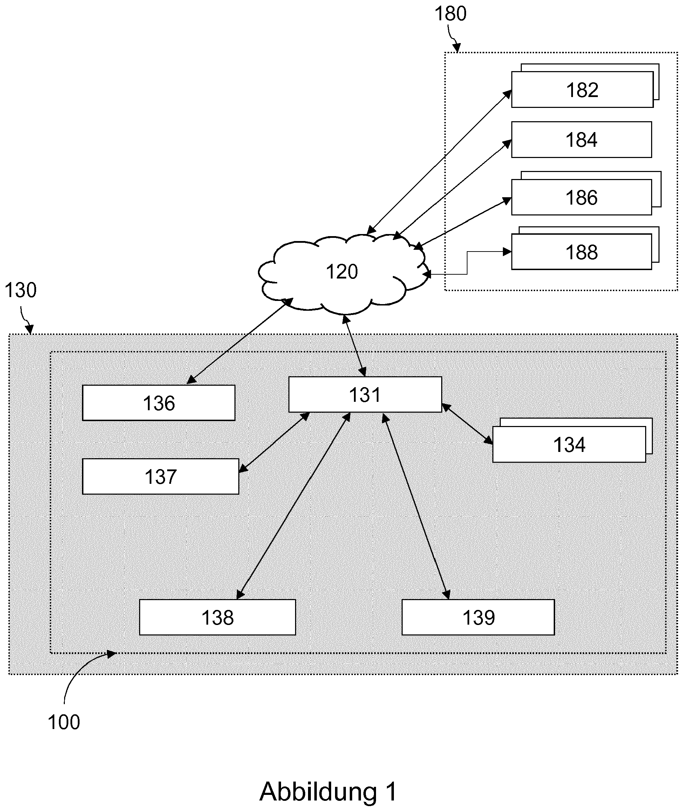

Abbildung 1 zeigt eine mögliche Anordnung eines Überwachungssystems 100 welches aus einer oder mehreren Überwachungselektroniken (Master 131 und Slave 134 Einheiten) besteht und weitere Module 136, 137, 138, 139 enthalten kann.

Die Überwachungselektronik 131 befindet sich in einer überwachten Umgebung 130, beispielsweise eine Wohnung, ein Büro, eine Werkstatt oder ähnliches, welche aus einem oder mehreren Räumen bestehen. In dieser überwachten Umgebung hält sich die überwachte Person auf.

Diese Master Überwachungselektronik 131 kann sich über eine drahtgebundene oder wireless Datenverbindung oder eine Sprachverbindung 120 mit mindestens einer externen Kommunikationsvorrichtung 180 verbinden. Die Verbindung findet üblicherweise über einen Instant-Messaging-Dienst via Internet oder eine Applikation via Internet und/oder ein Mobilfunknetz (GSM, GPRS, UMTS, LTE) 120 statt. Externe Kommunikationsvorrichtungen sind Geräte wie Smart Devices 188 (z.B. Smartphones, Tablets, Smartwatches o.ä.), Telefone 186, Notrufzentralen 184 oder auch Geräte, die mit künstlicher Intelligenz ausgestattet sind 182.

Das Überwachungssystem 100 kann neben der Master Überwachungselektronik 131 eine oder mehrere Slave Überwachungselektroniken 134 enthalten, um die überwachte Umgebung 130 besser abdecken zu können. Diese Slaves 134 können sich innerhalb der überwachten Umgebung 130 in einem anderen Bereich desselben Raums oder in einem anderen Raum befinden, welcher akustisch vom Raum getrennt ist, in welcher die Master Überwachungselektronik 131 steht. Zur Kommunikation des Slave 134 mit dem Master 131 werden gängige Funkstandards (Bluetooth, Wifi, DECT) verwendet.

Weiter können sich innerhalb der überwachten Umgebung 130 ein oder mehrere weitere Sensor oder Aktormodule 139 oder mobile Module wie Roboter mit beispielsweise künstlicher Intelligenz 138 befinden, die über eine drahtlose Verbindung mit der Master Überwachungselektronik 131 kommunizieren. Solche Module können auch Aufgaben von Smart Home Anwendungen übernehmen wie das Steuern der Heizung oder der Jalousien oder weiterer Aufgaben zur Unterstützung der überwachten Person.

Es kann auch eine weitere unabhängige Master Überwachunselektronik 136 in der überwachten Umgebung 130 stehen.

Zum Einrichten und Konfigurieren der Master Überwachungselektronik 131 kann von einer überwachten oder andere Person via Smart Device 137 wie einem Smartphone, einem Tablet oder ähnlichem eine interne wireless Datenverbindung via Bluetooth, Wifi, DECT oder ähnlichen gängigen Funkstandards aufgebaut werden. Zum Einrichten und Konfigurieren kann eine Datenverbindung von einem externen Smart Device 188 auch über eine externe Verbindung 120 wie z.B. Cloud aufgebaut werden.

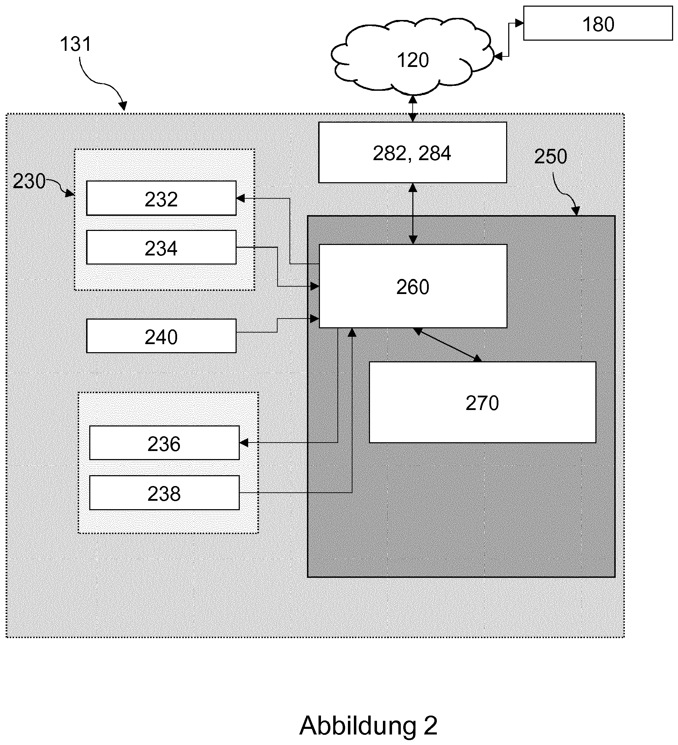

In Abbildung 2 ist eine Ausführung der Master Überwachungselektronik 131 gezeigt. Die Master Überwachungselektronik 131 enthält eine Freisprecheinrichtung 230 bestehend aus einem Audio-Empfänger 234 und einem Lautsprecher 232. Der Audio-Empfänger 234 kann ein einzelnes Mikrofon sein, wird aber vorzugsweise für die Anforderungen der Fernfeldaufnahme (far-field recording) optimiert; beispielsweise durch die Anordnung mehrerer Mikrofone in einem Array.

Die Master Überwachungselektronik 131 kann weitere Sensoren 240 aufweisen, welche Umweltdaten der überwachten Umgebung aufzeichnen wie beispielsweise Bewegungssensor, Temperatursensor, Feuchtesensor, Gassensor, insbesondere CO2-Sensor, Kamera (inkl. Infrarot Kamera und Time of Flight Sensorik), Radar oder andere dem Fachmann bekannte Sensoren, die es erlauben, Umweltdaten aufzuzeichnen.

Die Analyse dieser Sensordaten, mit dem Fachmann bekannten Methoden, erlaubt beispielsweise eine Abschätzung der Belegungswahrscheinlichkeit eines Raumes. Mittels Abgleich der Geräuschklassifizierung mit diesen weiteren Sensorsignalen kann so die Robustheit der Geräuschklassifizierung erhöht werden. Weiter werden über die Datenanalyse der Umweltdaten über grössere Zeiträume normale Verhaltensmuster der Person durch Methoden des maschinellen Lernens erlernt. Dadurch können die Umweltdaten dazu genutzt werden, langfristige Veränderungen im Verhalten der überwachten Person zu erkennen und so schleichende degenerative Vorgänge frühzeitig zu erkennen. Ausserdem können plötzlich auftretende Abweichungen vom gelernten normalen Verhaltensmuster auf eine Situation hinweisen, in welcher eine Person Unterstützung benötigt.

Die Raumsensordaten können ausserdem verwendet werden, um das Wohlbefinden einer Person im Raum zu erhöhen, indem Rückmeldungen über eine App, welche auf dem Smart Device 184 läuft, ausgegeben werden oder über Sprachfeedback durch die Laustprecher 232 in der Überwachungselektronik 131. Die Rückmeldungen können auch an weitere Geräte 138, 139 gegeben werden, um geeignete Massnahmen zur Verbesserung des Wohlbefindens in der überwachten Umgebung 130 zu treffen.

Die Überwachungselektronik 131 besitzt eine Vorrichtung zur Ausgabe eines lokalen Alarms 236 und eine weitere Vorrichtung zur Quittierung 238 dieses lokalen Alarms. Als Alarmsignal kommen jede Art von klar hörbaren und erkennbaren akustischen Signalen (z.B. Musik, Sprache, Sirene, Pfeifen oder Piepsen), optischen Signalen wie Anzeigen auf einem Bildschirm (z.B. Gefahrensignal, Blinken oder Nachricht) oder Lichtsignale (z.B. Blinken, Verändern der Lichtintensität oder Lichtfarbe) oder eine Kombination mehrerer dieser Signale in Frage. Diese können in der Intensität, Zeit oder Art auch an die Gefahrenstufe der Notsituation angepasst werden.

Die Datenerfassung, -speicherung, -prozessierung und -analyse wird in einer Datenverarbeitungseinheit 250 durchgeführt. Ein Hardwaremodul 260 der Datenverarbeitungseinheit basiert auf einem oder mehreren Prozessoren und einem oder mehreren Speichern. Ein Softwaremodul 270 der Datenverarbeitungseinheit enthält Software zur Verarbeitung eintreffender Signale wie des Audio-Empfängers und der weiteren Sensoren, sowie des Quittiersignals. Weiter enthält es Software zur Analyse der Daten wie Software zur Geräusch- und Spracherkennung für die Audiodaten und zur Sensorfusion und maschinellen Lernen der weiteren Sensordaten. Ausserdem ist Software vorhanden, die die Signalausgabe wie Alarmausgabe und Lautsprecherausgabe steuert. Auch eine Software zur Datenspeicherung ist in diesem Modul 250 lauffähig gespeichert. Im Folgenden wird die gesamte Hardware und Software, die für die Verarbeitung und Analyse des Audiosignals nötig ist, als "Audiomodul" bezeichnet.

Im Alarmfall wird eine externe Hilfsperson kontaktiert. Zur Kommunikation mit dieser externen Hilfsperson werden gängige Datenkanäle wie Instant-Messaging-Dienst via Internet oder eine Applikation via Internet und/oder ein Mobilfunknetz (GSM, GPRS, UMTS, LTE) 120 und externe Kommunikationsvorrichtungen 180 verwendet. Für diese Kommunikation wird ein externes Kommunikationsmodul 284 verwendet, welches Hardware enthält, die für die externe Kommunikation ausgelegt ist sowie die entsprechende Software. Der Master und jeder Slave kann eine eigene direkte Stromversorgung durch das Stromnetz besitzen und muss nicht batteriebetrieben sein.

In einer möglichen Ausführung werden die Daten nicht lokal ausgewertet, sonder an einen externen Server (z.B. Cloud Server) 120 übermittelt und dort analysiert. Das Ergebnis der Analyse wird dann zurück an den Master 131 kommuniziert und kann der überwachten Person bzw. den externen Hilfspersonen auch direkt vom Server zur Verfügung gestellt werden.

Wie in Abbildung 1 aufgezeigt, können neben der Master Überwachungselektronik 131 weitere Einheiten aufgestellt werden. Diese Slaves 134 stellen eine vereinfachte Version des Masters 131 dar. Die wireless Funkverbindung zwischen Slave 134 und Master 131 wird mittels eines in beiden Überwachungseinheiten integrierten internen Kommunikationsmoduls 282 mit der nötigen Hardware und der dazugehörigen Software realisiert. In der bevorzugten Ausführung enthalten die Slaves 134 alle Komponenten, die der Master 131 auch hat, bis auf das externe Kommunikationsmodul 284.

In anderen Ausführung können einzelne oder mehrere Schritte der Datenerfassung, - speicherung, -prozessierung sowie der -analyse vom Slave 134 an den Master 131 verlagert werden.

Ausserdem muss der Slave 134 nicht einen Audio-Empfänger 234, einen Lautsprecher 232, weitere Sensoren 240, eine Vorrichtung zur Ausgabe eines lokalen Alarms 236 und eine Vorrichtung zur Quittierung 238 haben. Er kann auch nur eine oder mehrere dieser Komponenten enthalten.

In einer möglichen Ausführung ist der Slave 134 beispielsweise ein einzelner Sensor mit einem internen Kommunikationsmodul 282, das die Daten direkt an den Master 131 überträgt.

### Verfahren

Das Ziel des Überwachungsverfahrens gemäss der hier beschriebenen Erfindung ist es, der überwachten Person in einer Notsituation effizient Hilfe zukommen zu lassen und die externe Hilfsperson möglichst gut über die Lage der überwachten Person zu informieren ohne zu stark in die Privatsphäre der überwachten Person eingreifen zu müssen. Ausserdem soll die überwachte Person die Möglichkeit zur Quittierung eines Alarms haben, bevor dieser an eine externe Hilfsperson gesendet wird.

Der Auslöser einer Notsituation ist ein Ereignis 300. Ein Ereignis 300 kann zum einen eine akute medizinische Beschwerde sein (wie z.B. ein Sturz, Verletzung, Verbrennung, Schwindel- oder Schwächeanfall, Immobilität, Herzproblem) oder einen externen Verursacher haben (wie z.B. Rauchentwicklung, Feuer, Wasserschaden, Gasaustritt, Einbruch, Stromschlag).

Das Ereignis 300 versetzt die überwachte Person in eine Notsituation. Diese Notsituation veranlasst die überwachte Person dazu, sich aktiv um Hilfe zu bemühen. Üblicherweise ist diese Bemühung mit Geräuschen verbunden (mechanische Geräusche und/oder menschliche Laute). Diese Geräusche, in dieser Beschreibung "Triggersignale" 301 genannt, detektiert die vorliegende Erfindung.

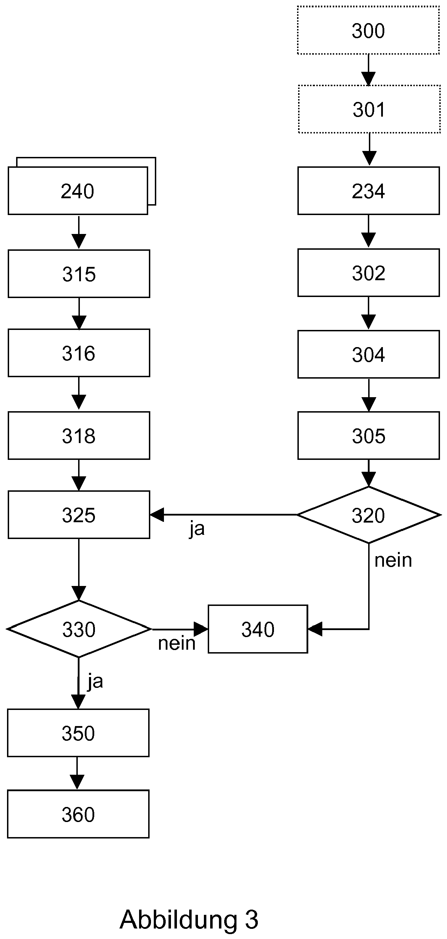

Das Flussdiagramm in Abbildung 3 fasst die einzelnen Schritte des Überwachungsverfahrens gemäss einer möglichen Ausführung zusammen. Die Datenverarbeitungseinheit 250 der Überwachungselektronik 131 (möglicherweise auch 134, 136, 138 oder 139) erfasst das eintreffende Audiosignal 234 und führt eine Datenaufbereitung des Audiosignals 302 durch. Dazu werden die Daten in einem Daten-Buffer 304 zwischengespeichert. Es ist zu beachten, dass für das Audiosignal immer nur die minimal nötige Zeitspanne zwischengespeichert wird. Gerade ausreichend viel Audiomaterial, um das längste definierte Triggersignal 301 zu beinhalten, üblicherweise also wenige Sekunden. Selbst, wenn unbefugte Stellen Zugang zu diesem Audiosignal bekommen, kann aus diesem alleinstehenden Signal keine wertvolle Information gezogen werden.

Für eine Klassifizierung 305 des Audiosignals in Echtzeit werden, dem Fachmann bekannt, Algorithmen aus der Geräusch- und Spracherkennung verwendet.

Die Geräuscherkennung der Überwachungselektronik erkennt dabei insbesondere vorher definierte Triggersignale 301 wie mechanische Geräusche (z.B. klopfen, klatschen, kratzen) oder menschliche Laute (z.B. röcheln, schreien, stöhnen) und/oder verschiedene Hilferufe (z.B. "Hilfe!", "Helft mir!"...).

Triggersignale 301 sind durch die überwachte Person aktiv ausgeführte Geräusche, die ausdrücken, dass er/sie Hilfe benötigt. Diese Triggersignale 301 liegen zeitlich meist nach dem Ereignis 300, da sie die Reaktion der überwachten Person auf das Ereignis 300 abbilden.

Triggersignale 301 können auf die lokalen Sprachen sowie lokal übliche Geräusche und Ausrufe, die in einem Notfall getätigt werden, angepasst werden.

Wird ein Triggersignal 301 erkannt, so gibt das Klassifizierungsmodul nach einer Abfrage "Audioalarm?" 320 ein Resultat "Audioalarm" aus. Dieses Resultat kann weitere Informationen zum erkannten Geräusch enthalten wie den Typ des Triggersignals und die Erkennerwahrscheinlichkeit. Wird kein Triggersignal erkannt, so bleibt die Überwachungselektronik im Normalzustand 340 ("Status = ok!").

In einer möglichen Ausführung werden neben dem Audio-Empfänger 324 weitere Sensorsignale 240 (Sensor 1 bis Sensor N) berücksichtigt. Diese werden in der Überwachungselektronik 131 (oder auch 134, 136 oder 139) zunächst in 315 aufbereitet und in 316 gespeichert. Dabei kann ein Speicherort in der Überwachungselektronik oder extern 120 (z.B. Cloud, Server, Smart Device...) lokalisiert sein. Eine Datenanalyse 318 geschieht durch mindestens eine Methode der Sensorfusion, des maschinellen Lernens oder der statistischen Auswertung oder einer Kombination mehrerer dieser Methoden. Ziel der Auswertung ist es beispielsweise, eine Aussage über den Aufenthaltsort, den Aktivitätstyp oder -grad der überwachten Person im Raum zu erhalten. Ausserdem wird das Normalverhalten der überwachten Person erlernt und es können so Abweichungen von diesem Normalverhalten detektiert werden. Die weiteren Sensoren 240, werden unter anderem eingesetzt, um die Klassifizierung des Audiosignals robuster zu machen.

Die Information, die aus den Signalen der weiteren Sensoren 240 erhalten wird, kann für einen Plausibilitätstest 325 des detektierten Audioalarms herangezogen werden. Eine Abfrage "Ereignis detektiert?" 330 führt zu einem positiven oder negativen Resultat. Ein negatives Testergebnis verhindert eine Alarmierung und hält die Überwachungselektronik 131 im Normalzustand 340 ("Status = ok!"). Ein positives Testergebnis bestätigt einen detektierten Audioalarm und damit ein vorangegangenes Ereignis 300. Die Überwachungselektronik 131 wird in einen Alarmzustand 350 ("Status = Alarm!") versetzt und gibt einen Alarm aus 360. Zusammen mit dem Alarm 360 können weitere Charakteristika des Alarms übermittelt werden, wie die Gefahrenstufe oder der Typ des Triggersignal (z.B. "Hilfe", klopfen...).

In einer Ausführung macht das System in regelmässigen Zeitabschnitten eine Statusausgabe, die lokal oder extern gespeichert wird. Die überwachte Person und die externen Hilfspersonen können jederzeit auf diese Informationen zugreifen (z.B. auf der externen Kommunikationsvorrichtung) und so den Status der überwachten Umgebung 130 bzw. der überwachten Person einsehen.

Die weiteren Sensoren 240 erlauben auch eine Alarmierung bei schleichend degenerativen Vorgängen oder wenn sich das normale gelernte Verhaltensmuster plötzlich verändert. In einer Ausführung kann beispielweise bei einer Abweichung vom Normalverhalten über einen definierten Zeitraum und in einer definierten Grösse auch ein Alarm ausgelöst werden. Dieser kann auch mit einer geringeren Dringlichkeit versendet werden; beispielsweise in einer Textnachricht wie E-Mail oder SMS anstatt per Telefonanruf.

Die Überwachungselektronik 131 beginnt das Alarmierungsverfahren sobald sie sich im Alarmzustand 350 befindet.

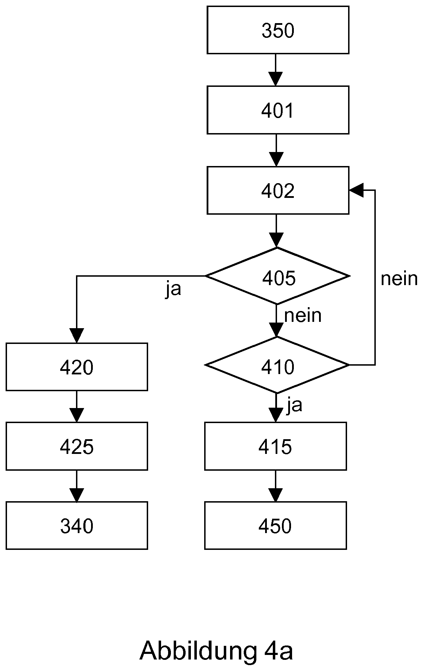

Abbildung 4a zeigt dieses Alarmierungsverfahren auf. Mit Beginn des Alarmzustands 350 wird eine Audioaufzeichnung gestartet 401 und ein lokaler Alarm ausgegeben 402. Die überwachte Person hat die Möglichkeit, diesen durch eine Quittierung zu beenden und so Fehlalarme abzufangen. Die überwachte Person kann den Alarm über eine akustische, physische oder optische Interaktion mit dem System bzw. der Überwachungselektronik 131 quittieren. Als Quittiersignal kommen akustische Signale wie Sprache oder andere klar vernehmbare Geräusche (z.B. Pfeifen, Klopfen, Klatschen o.ä.) in Frage; weiter kann das Betätigen einer Vorrichtung an der Überwachungselektronik (z.B. Knopf, Schalter, Taste, berührungsempfindlicher Bildschirm o.ä.) den Alarm beenden. Auch optische Signale wie eine Geste der überwachten Person (z.B. Winken o.ä.) können den Alarm quittieren. Eine Abfrage "Quittiert?" 405 wird während des Alarmzustands kontinuierlich durchgeführt. Bei einer Quittierung wird auch eine Audioaufzeichnung beendet 420 und das System wird in den Normalzustand 340 versetzt. Weiter kann ein Löschen der Audioaufzeichnung 425 zum Schutz der Privatsphäre vorgenommen werden.

Der lokale Alarm kann vor Ablauf eines definierten Quittierzeitraums quittiert werden, welcher in einer Abfrage "Zeit abgelaufen?" 410 überprüft wird. Falls die Quittierung im Quittierzeitraum nicht getätigt wurde, wird der lokale Alarm beendet 415. Das System befindet sich weiterhin im Alarmzustand 350. Im nächsten Schritt beginnt ein externe Alarm 450.

Der lokale Alarm kann auch auf ein sich im überwachten Raum befindenden Gerät 138, 139 gesendent werden oder über die Cloud 120 auf ein Smart Device 188 welches der überwachten Person gehören kann.

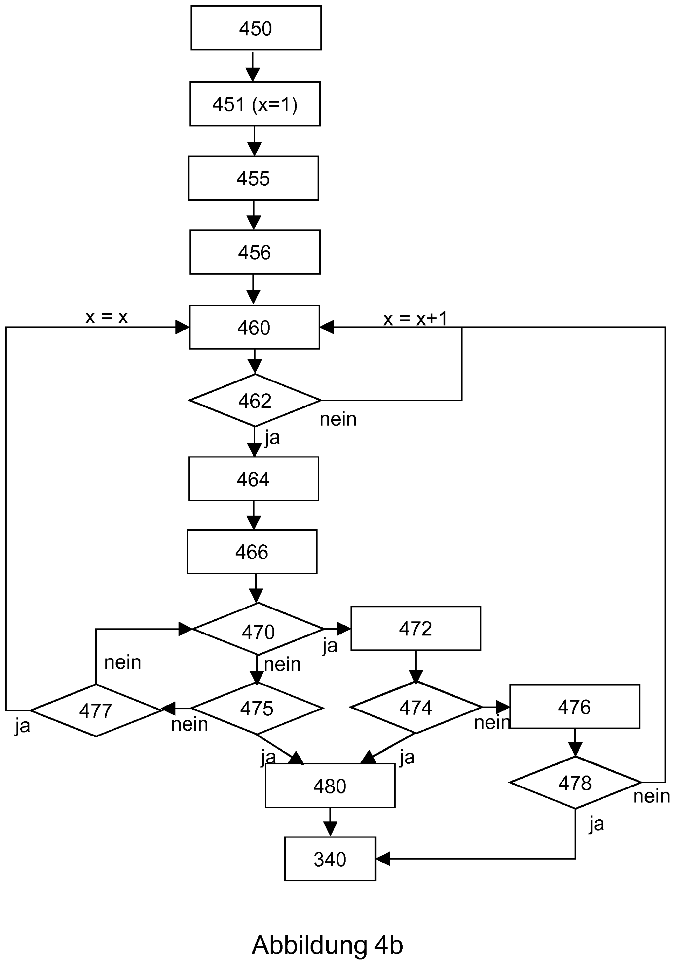

In Abbildung 4b wird das Verfahren für den externen Alarm 450 beschrieben. Zu Beginn wird ein Parameter x auf den Wert 1 gesetzt 451. Dieser dient dazu, die Positionierung der externen Hilfsperson in einer hinterlegten Liste der externen Hilfspersonen zu beschreiben. Es können dabei eine oder mehrere Listen hinterlegt sein, die je nach Alarmtyp oder abhängig der Zeit verwendet werden. So kann beispielsweise in der Nacht eine andere Liste verwendet werden als am Tag. Das externe Kommunikationsmodul 284 der Überwachungselektronik versucht in 460, eine Sprachverbindung zu einer ersten Person auf der Liste der externen Hilfspersonen aufzubauen.

Weiter wird eine Audiodatei aufbereitet und versandt 456. Dazu wird die Audioaufzeichnung aufbereitet und in ein gängiges Audiodateiformat (z.B. wav, mp3, wma) gebracht. Die Datei kann entweder einen Teil des bis zu diesem Zeitpunkt aufgezeichneten Audiosignals oder das gesamte bis zu diesem Zeitpunkt aufgezeichnete Audiosignal enthalten. Diese Audiodatei wird über das externe Kommunikationsmodul 284 mittels gängiger Datenkanäle wie Instant-Messaging-Dienst via Internet oder eine Applikation via Internet und/oder ein Mobilfunknetz (GSM, GPRS, UMTS, LTE) versandt.

Es wird ausserdem die Freisprecheinrichtung gestartet 455 und im Raum ist beispielsweise ein Wählsignal oder eine andere Bestätigung über die Durchführung einer externen Alarmierung hörbar.

Schritt 455, 456 und 460 können in jeder beliebigen Reihenfolge durchgeführt werden. Es ist auch möglich, dass zwei oder alle Schritte gleichzeitig ausgeführt werden.

Weiter ist es möglich, dass nur einer oder mehrere der Schritte 455, 456 und 460 ausgeführt werden.

Über eine Abfrage "Angenommen?" 462, wird überprüft, ob eine Sprachverbindung aufgebaut wurde. Falls der Anruf von einem Roboter angenommen wurde wie beispielsweise einer Mailbox kann die Verbindung unterbrochen werden. Kann eine Sprachverbindung aufgebaut werden, so kann eine automatisierte Ansage 464 die externe Hilfsperson über die Charakteristika des Alarms 360 informieren. Danach kann die überwachte Person über die Freisprecheinrichtung jeder beliebigen Überwachungselektronik (Master oder Slave) mit der externen Hilfsperson kommunizieren 466.

Falls keine Sprachverbindung zur externen Hilfsperson 1 aufgebaut werden kann, wird nacheinander jede weitere hinterlegte externe Hilfsperson kontaktiert bis die überwachte Person per Sprachverbindung mit einer externen Hilfsperson verbunden ist, oder die Liste erfolglos durchprobiert wurde.

Mittels 456 wird jeder externen Hilfsperson, die in diesem Verfahren kontaktiert wurde, ein Ausschnitt des oder das komplette aufgenommenen und aufbereiteten Audiosignals zugesandt. Diese Information erlaubt es den externen Hilfspersonen, sich einen Eindruck der Lage zu verschaffen und die Dringlichkeit des Notrufs besser einzuschätzen. Da die externe Hilfsperson häufig eine der überwachten Person nahestehende Person ist, kann dabei auch die Kenntnis der Person mit in die Bewertung des Audiosignals einfliessen. Die gesamte Audioaufzeichnung wird den externen Hilfspersonen über gängige Datenkanäle beispielsweise auf den externen Kommunikationsvorrichtungen 180 zur

Verfügung gestellt und kann eingesehen werden. Die externen Hilfspersonen haben so ein lückenloses Bild über den Verlauf der Notsituation ab dem Zeitpunkt, zu dem sich die überwachte Person um Hilfe bemüht hat. Dieser fällt üblicherweise mit dem Beginn eines Triggersignals 510 zusammen. Im Gegensatz zu anderen Verfahren, geht so keine Information verloren, auch wenn der Aufbau der Sprachverbindung 460 zu einer externen Hilfsperson länger dauert. Auch der Quittierzeitraum 532 kann daher beliebig lang gewählt werden, da der Verlust von wertvoller Information keine Gefahr darstellt.

Um das System nach Aufbau der Sprachverbindung 460 wieder in den Normalzustand 340 zu bringen, muss der Alarmzustand aktiv beendet werden, beispielsweise über einen Tastendruck oder eine sonstige Eingabe wie Sprache oder Text auf der externen Kommunikationseinrichtung. Eine Variante der Quittierung kann auch das Auflegen des Telefons durch die externe Person sein, womit signalisiert wird, dass keine Gefahrensitutation vorliegt. Die Sprachverbindung wird über einen vorher definierten Zeitraum unterstützt. Ist bis zum Ende dieses Zeitraums keine Quittierung eingegangen (wird überprüft durch eine Abfrage "Zeit abgelaufen?" 470), wird eine Aufforderung zur Beendigung des Alarmzustands ausgegeben 472 (z.B. durch eine automatische Ansage). Wird dieser Aufforderung laut einer Abfrage "Aufforderung erfüllt?" 474 nachgekommen, so wird die Sprachverbindung beendet 480 und das System in den Normalzustand 340 versetzt. Wird der Alarmzustand nicht beendet, wird ebenfalls die Sprachverbindung abgebrochen und die externe Hilfsperson hat die Möglichkeit, das System anzurufen 476. Ist nach einer gewissen Zeit laut einer Abfrage "Anruf eingegangen?" 478 kein externer Anruf eingegangen und das System befindet sich noch im Alarmzustand, so wird die nächste externe Hilfsperson auf der Liste kontaktiert.

Ist vor Ablauf der maximalen Gesprächszeit der Alarmzustand noch nicht aktiv beendet worden und wird die Sprachverbindung laut einer Abfrage "Sprachverbindung unterbrochen?" 477 unterbrochen, so wird dieselbe externe Hilfsperson nochmals kontaktiert, die vor dem Unterbruch der Sprachverbindung mit der überwachten Person in Kontakt war.

Es werden so lange externe Hilfspersonen kontaktiert, bis das System durch eine Beendigung des Alarmzustands 475 wieder in den Normalzustand 340 versetzt wird.

In einer Ausführung kann die erfolglos kontaktierte externe Hilfsperson beim Erhalten der Audionachricht die Überwachungselektronik 131 anrufen. Eine Sprachverbindung wird in diesem Fall ohne aktives Annehmen der überwachten Person aufgebaut, da diese möglicherweise nicht in der Lage ist, diesen aktiv anzunehmen. Der hier beschriebene Modus des passiven Annehmens eines externen Anrufs soll ausschliesslich verwendet werden, wenn sich das System im Alarmzustand 350 befindet. Durch dieses Verfahren wird ermöglicht, dass auch bei erfolgloser Kontaktierung aller externen Hilfspersonen nach einer gewissen Zeit eine externe Reaktion erfolgt.

In einer anderen Ausführung wird nicht versucht, eine Sprachverbindung aufzubauen. Es wird nur eine Audiodatei an eine oder mehrere der externen Hilfspersonen versandt. Diese haben nach Abhören der Audioaufzeichnung die Möglichkeit, das System anzurufen und so in eine direkte Sprachverbindung mit der überwachten Person zu treten.

In einer anderen Ausführung wird das Audiosignal eines Aufzeichnungszeitraums Δt1 522 in mittels Methoden der Sprache-nach-Text-Umwandlung in einen Text umgewandelt und in einer Textdatei abgespeichert. Diese wird dann mittels gängiger Datenkanäle wie Instant-Messaging-Dienst via Internet oder eine Applikation via Internet und/oder ein Mobilfunknetz (GSM, GPRS, UMTS, LTE) an eine oder mehrere externe Hilfspersonen gesendet. Weiter kann zusätzich auch die Audiodatei versandt werden.

In einer anderen Ausführung werden die Umweltdaten der weiteren Sensoren 240 bei einem externen Alarm 450 als zusätzliche Information mit der Audiodatei mitgeschickt oder in der automatisierten Ansage 464 zu Beginn der Sprachverbindung 542 mitgeteilt.

In einer anderen Ausführung wird eine Abweichung vom Normalverhalten in den Umweltdaten in eine Kenngrösse zusamengefasst (z.B. Wahrscheinlichkeit für einen Schwächeanfall der überwachten Person) und bei einem externen Alarm 450 als zusätzliche Information mit der Audiodatei mitgeschickt oder in der automatisierten Ansage 464 zu Beginn der Sprachverbindung 542 mitgeteilt.

In einer Ausführung wird jede erfolglos kontaktierte externe Hilfsperson nach erfolgreichem Aufbau einer Sprachverbindung zu einer externen Hilfsperson darüber informiert, dass die überwachte Person mit einer externen Hilfsperson in Kontakt getreten ist. Es kann auch über die Identität der externen Hilfsperson sowie Länge des Kontakts und den Zeitpunkt informiert werden. Diese Nachricht wird durch gängige Datenkanäle wie E-Mail, SMS oder Whatsapp übertragen.

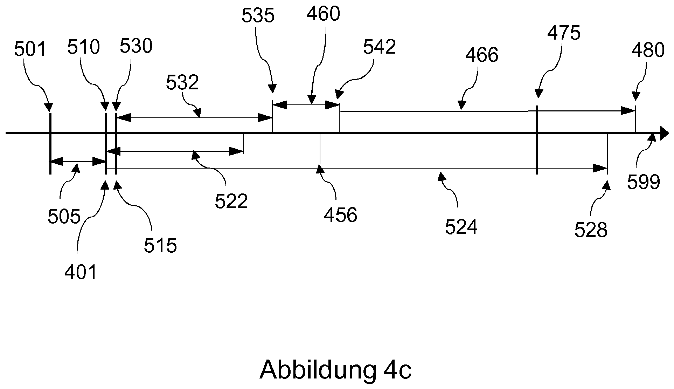

Abbildung 4c veranschaulicht detailliert, die zeitliche Abfolge der Schritte im Alarmfall gemäss einer möglichen Ausführung. Alle Schritte sind auf einer Zeitachse 599 angeordnet. Ein Ereignis 300, das die überwachte Person in eine Notsituation versetzt, beginnt zu einem Zeitpunkt t0 501. Nach diesem Ereigniszeitpunkt t0 501 gibt es eine zeitliche Verzögerung Δt0 505, da die überwachte Person mit einer gewissen Reaktionszeit auf das Ereignis 300 reagiert. Diese Verzögerung 505 kann beliebig kurz und beliebig lange ausfallen. Eine überwachte Person kann bereits während eines Sturzes um Hilfe rufen oder auch erst nachdem er/sie nach einigen Minuten oder Stunden aus einer Ohnmacht wieder zu sich gekommen ist.

Die Reaktion der überwachten Person auf das Ereignis ist das Triggersignal 301 mit einem Beginn 510 und einem Ende 515. Dieses Ende ist ein Triggerzeitpunkt t1 515. Zum Triggerzeitpunkt t1 515 wird ein lokaler Alarm 402 ausgegeben. Dies geschieht durch ein Alarmsignal wie oben beschrieben. Der Beginn eines lokalen Alarms ist der Beginn eines Quittierzeitraums 530. Dieser Zeitpunkt 530 muss nicht zwangsläufig mit dem Triggerzeitpunkt 515 zusammenfallen, kann aber frühestens mit dem Triggersignal eintreffen. Ein Quittierzeitraum Δt2 532 kann beliebig lange gewählt werden und möglicherweise an die Gefahrenstufe der Notsituation angepasst werden.

Nach Ende des Quittierzeitraums 535 ohne eine Quittierung der überwachten Persons wird eine Kommunikation nach aussen gestartet. Der Aufbau einer Sprachverbindung 460 geht dem Beginn der Sprachverbindung 542 voraus und kann eine beliebig lange Zeit in Anspruch nehmen, falls keine externe Hilfsperson erreichbar ist.

Vor Beendigung der Sprachverbindung 480 ist eine Beendigung des Alarmzustands 475 nötig. Diese kann zu jedem beliebigen Zeitpunkt ab Ausgabe des lokalen Alarms erfolgen. Weiterhin kann die Beendigung des Alarmzustands 475 durch die überwachte Person oder die externe Hilfsperson durchgeführt werden. Die externe Hilfsperson wird eine Beendigung des Alarmzustands 475 in der Regel nach Beginn der Sprachverbindung 542 und vor Beendigung der Sprachverbindung 480 durchführen.

Zum Triggerzeitpunkt 515, wird eine Audioaufzeichnung gestartet, die das Triggersignal 301 beinhaltet. Dies wird dadurch erreicht, dass das zwischengespeicherte Signal aus dem Daten-Buffer 304 nun dauerhaft gespeichert wird und den ersten Teil der Audioaufzeichnung darstellt. Die Audioaufzeichnung 524 kann beliebig lang durchgeführt werden, wird aber in der Regel vor oder mit Ende der Sprachverbindung abgebrochen.

Ein erster Teil der Audioaufzeichnung wird nach Ablauf eines Aufzeichnungszeitraums Δt1 522 für den Versand an externe Hilfspersonen aufbereitet. Die Dauer des Aufzeichnungszeitraums Δt1 522 ist in der Regel mit dem Beginn einer Sprachverbindung 542 beendet, kann aber auch vorher oder erst mit Ende der Audioaufzeichnung 528 abgeschlossen werden.

### Bezugszeichenliste

- 100: Überwachungssystem (umfasst Überwachungselektronik und mindestens ein weiteres Modul (z.B. Slave, Sensormodul))
- 120: Internet, Cloud, Server, Telefonleitung, Mobilfunknetz
- 130: überwachte Umgebung
- 131: Master Überwachungselektronik
- 134: Slave Überwachungselektronik
- 136: unabhängige Masterüberwachungselektronik (zusätzlich zu 131)
- 137: Smart Device (für Konfiguration)
- 138: Sensor oder Aktormodule
- 139: mobile Module (z.B. Roboter mit beispielsweise künstlicher Intelligenz)
- 180: externe Kommunikationsvorrichtungen
- 182: Gerät mit beispielsweise künstlicher Intelligenz
- 184: Notrufzentrale
- 186: Telefon
- 188: Smart Device (z.B. Smartphones, Tablets, Smartwatches)
- 230: Freisprecheinrichtung
- 232: Lautsprecher
- 234: Audio-Empfänger
- 236: Vorrichtung zur Ausgabe eines lokaler Alarms
- 238: Vorrichtung zur Quittierung
- 240: weitere Sensoren
- 250: Datenverarbeitungseinheit
- 260: Hardwaremodul der Datenverarbeitungseinheit
- 270: Softwaremodul der Datenverarbeitungseinheit
- 282: internes Kommunikationsmodul
- 284: externes Kommunikationsmodul
- 300: Ereignis
- 301: Triggersignal
- 302: Datenaufbereitung des Audiosignals
- 304: Daten-Buffer
- 305: Klassifizierung
- 315: Datenaufbereitung
- 316: Datenspeicherung
- 318: Datenanalyse (mittels maschinellem Lernen und/oder Sensorfusion)
- 320: Abfrage "Audioalarm?"
- 325: Plausibilitätstest
- 330: Abfrage "Ereignis detektiert?"
- 340: Normalzustand (Status = ok!")
- 350: Alarmzustand (Status = Alarm!"
- 360: Alarmausgabe
- 401: Beginn Audioaufzeichnung
- 402: Ausgabe lokaler Alarm
- 405: Abfrage "Quittiert?"
- 410: Abfrage "Zeit abgelaufen?"
- 415: Beendigung lokaler Alarm
- 420: Beendigung Audioaufzeichnung
- 425: Löschen der Audioaufzeichnung
- 450: Ausgabe externer Alarm
- 451: Parameter x = 1 setzen (x beschreibt Platzierung der externen Hilfsperson auf der Liste der externen Hilfspersonen)
- 455: Start der Freisprecheinrichtung
- 456: Aufbereitung und Versand einer Audiodatei (Teil oder komplette Audioaufzeichnung)
- 460: Aufbau einer Sprachverbindung zu externer Hilfsperson x
- 462: Abfrage "Angenommen?"
- 464: automatisierte Ansage (enthält Informationen zur Notsituation und der überwachten Person)
- 466: Kommunikation über Freisprecheinrichtung
- 470: Abfrage "Zeit ablaufen?"
- 472: Aufforderung zur Beendigung des Alarmzustands
- 474: Abfrage "Aufforderung erfüllt?"
- 475: Abfrage "Alarmzustand beendet?"
- 476: Beendigung der Sprachverbindung mit Möglichkeit zum Anruf der externen Hilfsperson
- 477: Abfrage "Sprachverbindung unterbrochen?"
- 478: Abfrage "Anruf eingegangen?"
- 480: Beendigung Sprachverbindung
- 501: Ereigniszeitpunkt t0 (Beginn der Notsituation)
- 505: Verzögerung Δt0
- 510: Beginn Triggersignal
- 515: Triggerzeitpunkt t1 (Ende Triggersignal)
- 522: Aufzeichnungszeitraum Δt1 (für den Versand bestimmter Teil der Aufzeichnung 524
- 524: Audioaufzeichnung
- 528: Ende Audioaufzeichnung
- 530: Beginn Quittierzeitraum Δt2
- 532: Quittierzeitraum Δt2
- 535: Ende Quittierzeitraum Δt2
- 542: Beginn Sprachverbindung
- 599: Zeitachse

## Patentansprüche

1. Überwachungsverfahren für eine überwachte Person mittels mindestens einer Überwachungselektronik in einem Raum, wobei die Überwachungselektronik eine Freisprecheinrichtung und mindestens ein Audiomodul umfasst, sodass Audiosignale der überwachten Person erfasst und ausgewertet werden können und bei Erfassung eines Ereignisses eine Kommunikationsverbindung mit mindestens einer externen Hilfsperson aufbaubar ist,
**gekennzeichnet durch die Schritte:**
0.) ständige Erfassung der Audiosignale im Betriebszustand ohne Aufzeichnung der Audiosignale,
- ständige Prüfung der erfassten Audiosignale in Echtzeit auf ein Ereignis hindeutende vorab definierte Triggersignale, sodass
- nach Erkennen des definierten Triggersignals an einem Triggerzeitpunkt (t1) durch die Überwachungselektronik, welches auf ein Ereignis (z.B. einen Sturz) an einem Ereigniszeitpunkt (t0) vor dem Triggerzeitpunkt (t1) hindeutet, wird automatisiert von der Überwachungselektronik
1.) eine Aufzeichnung einer Audiodatei für einen Aufzeichnungszeitraum (Δt1) nach dem Triggerzeitpunkt (t1) gestartet und
2.) eine Quittierungsanfrage an die überwachte Person für einen Quittierzeitraum (Δt2) nach dem Triggerzeitpunkt (t1) gestellt, welche in Form eines akustischen oder optischen Quittiersignals an die überwachten Person übermittelt wird, wobei nur bei von der überwachten Person unterlassener Quittierung nach Ablauf des Quittierzeitraums (Δt2), durch aktives Eingreifen der überwachten Person an einer Quittiereinrichtung, welche mit der Überwachungselektronik verbunden ist,
3.) die Überwachungselektronik in den Alarmzustand versetzt wird und ein externes Alarmsignal in Form einer Kontaktaufnahme von der Überwachungselektronik an mindestens eine externe Hilfsperson gestartet wird,
sodass der Alarmzustand durch die mindestens eine kontaktierte externe Hilfsperson nach Aufnahme einer direkten Sprachverbindung mit der Überwachungselektronik beendet werden kann,
wobei bei erfolgter Quittierung der Quittierungsanfrage durch die überwachte Person innerhalb des Quittierzeitraum (Δt2) die Überwachungselektronik derart programmiert ist, dass kein Alarmzustand gemäss 3.) ausgelöst wird, die Quittierungsanfrage 2.) gestoppt wird, die Audioaufzeichnung 1.) gestoppt wird, die Audiodatei gelöscht wird und die Überwachungselektronik in den Normalzustand 0.) zurückgesetzt wird.

2. Überwachungsverfahren nach Anspruch 1, wobei nach nicht quittiertem Ablauf des Quittierzeitraums (Δt2) der Alarmzustand gemäss 3.) in Form der Kontaktaufnahme von der Überwachungselektronik mit der mindestens einen externen Hilfsperson, derart gestaltet ist, dass
a) die im Aufzeichnungszeitraum (Δt1) aufgezeichnete Audiodatei mittels Überwachungselektronik und einem Instant-Messaging-Dienst via Internet oder einer Applikation via Internet und/oder einem Mobilfunknetz (GSM, GPRS, UMTS, LTE) an die mindestens eine externe Hilfsperson in Form einer indirekten Sprachnachricht versandt wird
und/oder
b) die Überwachungselektronik eine direkte Sprachverbindung zwischen der mindestens einen externen Hilfsperson und der Überwachungselektronik über den Instant-Messaging-Dienst via Internet oder die Applikation via Internet und/oder das Mobilfunknetz aufbaut.

3. Überwachungsverfahren nach Anspruch 2, **wobei** nur die im Aufzeichnungszeitraum (Δt1) aufgezeichnete Audiodatei an die mindestens eine externe Hilfsperson von der Überwachungselektronik versandt wird und
nach Abhören der aufgezeichneten Audiodatei durch die mindestens eine externe Hilfspersonen anschliessend bei Bedarf eine rückgekoppelte direkte Sprachverbindung zur Überwachungselektronik mittels Instant-Messaging-Dienst via Internet oder eines Mobilfunknetzes (GSM, GPRS, UMTS, LTE) von der mindestens einen externen Hilfsperson zur Überwachungselektronik aufgebaut wird, mittels welcher der Alarmzustand der Überwachungselektronik beendet wird und das Ereignis bzw. das weitere Vorgehen besprochen wird.

4. Überwachungsverfahren nach Anspruch 2, **wobei** nach Versand der aufgezeichneten Audiodatei und/oder Aufbau einer direkten Sprachverbindung die Nichterreichbarkeit einer ersten externen Hilfsperson von dem Instant-Messaging-Dienst und/oder der Applikation und/oder vom Mobilfunknetz zurückgemeldet wird, die indirekte und/oder direkte Sprachverbindung zu einer weiteren externen Hilfsperson solange probiert wird, bis eine erfolgreiche indirekte und/oder direkte Sprachverbindung zustande kommt.

5. Überwachungsverfahren nach Anspruch 4, wobei nach erfolgreicher Aufnahme einer direkten Sprachverbindung der mindestens einen externen Hilfsperson mit der überwachten Person, Entwarnungsinformationen mittels Überwachungselektronik über den Instant-Messaging-Dienst via Internet oder der Applikation via Internet und/oder dem Mobilfunknetz (GSM, GPRS, UMTS, LTE) an die nicht erreichten externen Hilfspersonen versandt werden.

6. Überwachungsverfahren nach einem der vorhergehenden Ansprüche, **wobei** die aufgezeichnete Audiodatei mittels Sprache-nach-Text-Umwandlung in eine Textdatei umgewandelt wird und diese Textdatei zusammen mit der Audiodatei mittels Überwachungselektronik und Instant-Messaging-Dienst via Internet oder der Applikation via Internet und/oder dem Mobilfunknetz (GSM, GPRS, UMTS, LTE) an die externe Hilfsperson versendet wird.

7. Überwachungsverfahren nach einem der vorhergehenden Ansprüche, **wobei** die erfassten Audiosignale mit Methoden der Spracherkennung im Audiomodul analysiert und weiterverarbeitet werden.

8. Überwachungsverfahren nach einem der vorhergehenden Ansprüche, **wobei** die Überwachungselektronik mit mindestens einer weiteren Sensorelektronik in einem anderen Bereich des Raumes oder in Raum im Sinne einer Master-Slave-Architektur zusammenarbeitet, wobei die Sensorelektronik Audiosignale und Umweltdaten aus dem anderen Bereich des Raumes oder aus dem anderen Raum an die Überwachungselektronik liefert.

9. Überwachungsverfahren nach einem der vorhergehenden Ansprüche, **wobei** zusätzlich Umweltdaten mittels weiterer Sensoren, insbesondere Temperatursensoren, CO2-Sensoren, andere Gassensoren, Feuchtesensoren, Bewegungssensoren und/oder Kameras (inkl. Infrarot Kamera und Time of Flight Sensorik) kontinuierlich im Raum aufgenommen werden und an die Überwachungselektronik weitergeleitet werden, sodass die Umweltdaten als Teil des externen Alarmsignals mit der aufgezeichnete Audiodatei via Überwachungselektronik an die externe Hilfsperson übermittelt werden.

10. Überwachungsverfahren nach Anspruch 9, **wobei** aus der kontinuierlichen Aufnahme der Umweltdaten in der Überwachungselektronik normale Verhaltensmuster der überwachten Person über die Zeit ermittelt werden, sodass bei Versendung des externen Alarmsignals Informationen über ein abweichendes Verhalten der überwachten Person zeitlich vordem Ereignis mitübertragen werden können.

11. Überwachungsverfahren nach einem der vorhergehenden Ansprüche, wobei die Quittierung an der Überwachungselektronik
a) mechanisch, beispielsweise durch einen Tastendruck auf einer Taste oder einem berührungsempfindlichen Bildschirm
oder
b) akustisch durch Aussprache eines Quittierwortes oder -satzes erfolgt.

12. Überwachungsverfahren nach Anspruch 8, wobei die Überwachungselektronik und/oder die mindestens eine weitere Sensorelektronik mittels Anschluss an ein stationäres Stromnetz mit Strom versorgt werden.

## Claims

1. A monitoring method for monitoring a person by means of at least one electronic monitoring unit in a room, wherein the electronic monitoring unit comprises a hands-free speaking system and at least one audio module so that audio signals of the monitored person can be detected and analyzed and, on detection of an event, a communication connection with at least one remote caregiver can be established,
**characterized by the following steps:**
0.) continuous detection of the audio signals in the operating status without recording of the audio signals,
- continuous checking of the detected audio signals in real time for previously defined trigger signals indicating an event so that
- after identification of the defined trigger signal at a trigger point in time (t1) by the electronic monitoring unit, which trigger signal indicates an event (e.g., a fall) at an event point in time (t0) prior to the trigger point in time (t1), the electronic monitoring unit automatically
1.) starts recording an audio file over a recording period of time (Δt1) after the trigger point in time (t1) and
2.) submits an acknowledgment query to the monitored person for an acknowledgment period (Δt2) after the trigger point in time (t1), which acknowledgment query is transmitted in the form of an acoustic or optical acknowledgment signal to the monitored person, wherein, only on failure of an acknowledgment by the monitored person after expiration of the acknowledgment period (Δt2), the active intervention by the monitored person on an acknowledgment device which is connected to the electronic monitoring unit,
3.) causes the electronic monitoring unit to be put on alarm status and to start an external alarm signal in the form of the electronic monitoring unit establishing contact with at least one remote caregiver,
so that the alarm status can be terminated by the at least one contacted remote caregiver after a direct voice connection with the electronic monitoring unit has been established,
wherein, after acknowledgment of the acknowledgment query has been made by the monitored person within the acknowledgment period (Δt2), the electronic monitoring unit is programmed such that no alarm status as in 3.) is triggered, that the acknowledgment query 2.) is stopped, that the audio recording 1.) is stopped, that the audio file is deleted and that the electronic monitoring unit is reset to the normal status 0.).

2. The monitoring method as in Claim 1, wherein, after the unacknowledged expiration of the acknowledgment period (Δt2), the alarm status as in 3.) in the form of the establishment of contact by the electronic monitoring unit with the at least one remote caregiver is designed in such a manner that
a) the audio file recorded within the recording period (Δt1) is transmitted by means of the electronic monitoring unit and an instant messaging service via the Internet or an application via the Internet and/or a mobile radio network (GSM, GPRS, UMTS, LTE) to the at least one remote caregiver in the form of an indirect voice message
and/or
b) the electronic monitoring unit establishes a direct voice connection between the at least one remote caregiver and the electronic monitoring unit by means of the instant messaging service via the Internet or the application via the Internet and/or the mobile radio network.

3. The monitoring method as in Claim 2, **wherein** only the audio file recorded within the recording period (Δt1) is transmitted by the electronic monitoring unit to the at least one remote caregiver and,
after the at least one remote caregiver has listened to the recorded audio file, if needed, a direct feedback voice connection to the electronic monitoring unit is established by means of the instant messaging service via the Internet or a mobile radio network (GSM, GPRS, UMTS, LTE) by the at least one remote caregiver to the electronic monitoring unit, by means of which feedback the alarm status of the electronic monitoring unit is terminated and the event and/or the further method to be followed is discussed.

4. The monitoring method as in Claim 2, **wherein** after transmission of the recorded audio file and/or the establishment of a direct voice connection, the failure to contact a first remote caregiver is fed back by the instant messaging service and/or the application and/or by the mobile radio network, and an attempt is made to establish the indirect and/or direct voice connection to another remote caregiver for as long as it takes to establish a successful indirect and/or direct voice connection.

5. The monitoring method as in Claim 4, wherein, after the successful establishment of a direct voice connection between the at least one remote caregiver and the monitored person, an all-clear information is transmitted by the electronic monitoring unit by means of the instant messaging service via the Internet or the application via the Internet and/or the mobile radio network (GSM, GPRS, UMTS, LTE) to the remote caregivers who had not been reached.

6. The monitoring method as in any one of the preceding claims, **wherein** the recorded audio file is converted by means of voice-to-text conversion into a text file and this text file, together with the audio file, is transmitted by means of the electronic monitoring unit and the instant messaging service via the Internet or the application via the Internet and/or the mobile radio network (GSM, GPRS, UMTS, LTE) to the remote caregiver.

7. The monitoring method as in any one of the preceding claims, **wherein** the detected audio signals are analyzed and further processed in the audio module by means of methods of voice recognition.

8. The monitoring method as in any one of the preceding claims, **wherein** the electronic monitoring unit interacts with at least one additional set of electronic sensors in a different area of the room or in a room in the form of master-slave architecture, with the electronic sensors transmitting audio signals and environmental data from the other area of the room or from the other room to the electronic monitoring unit.

9. The monitoring method as in any one of the preceding claims, **wherein,** in addition, environmental data are continuously recorded by means of additional sensors, especially temperature sensors, CO2 sensors, other gas sensors, humidity sensors, motion sensors and/or cameras (including infrared cameras and time-of-flight sensors), in the room and routed to the electronic monitoring unit so that the environmental data are transmitted as part of the external alarm signal with the recorded audio file via the electronic monitoring unit to the remote caregiver.

10. The monitoring method as in Claim 9, **wherein,** based on the continuous recording of the environmental data in the electronic monitoring unit, overtime normal behavioral patterns of the monitored person are established so that information about behavior deviating from the normal behavior of the monitored person prior to the event can be transmitted along with the transmission of the external alarm signal.

11. The monitoring method as in any one of the preceding claims, wherein the acknowledgment on the electronic monitoring unit takes place
a) mechanically, for example, by pressing a key or a touchscreen display or
b) acoustically by uttering an acknowledgment word or sentence.

12. The monitoring method as in Claim 8, wherein the electronic monitoring unit and/or the at least one additional set of electronic sensors are supplied with power by a connection to a stationary power network.

## Revendications

1. Procédé de surveillance pour une personne surveillée au moyen d'au moins un système électronique de surveillance dans un espace, sachant que le système électronique de surveillance comprend un dispositif main libre et au moins un module audio de sorte que les signaux audio de la personne surveillée sont saisis et évalués et une liaison de télécommunication avec au moins une personne auxiliaire externe peut être établie lors de la saisie d'un événement,
**caractérisé par les étapes** :
0.) saisie permanente des signaux audio en état de fonctionnement sans enregistrement des signaux audio,
- contrôle permanent des signaux audio saisis en temps réel eu égard aux signaux de déclenchement préalablement définis indiquant un événement, de sorte
- qu'après identification du signal de déclenchement défini à un moment de déclenchement (t1) par le système électronique de surveillance, lequel indique un événement (par exemple une chute) à un moment d'événement (t0) avant le moment de déclenchement (t1), est lancé de façon automatisée par le système électronique de surveillance
1.) un enregistrement d'un fichier audio pour une période d'enregistrement (Δt1) après le moment de déclenchement (t1), et
2.) une demande d'accusé de réception à la personne surveillée pour une période d'accusé de réception (Δt2) est posée après le moment de déclenchement (t1), laquelle est transmise à la personne surveillée sous la forme d'un signal d'accusé de réception acoustique ou optique, sachant que seulement lors de l'accusé de réception négligé par la personne surveillée après expiration de la période d'accusé de réception (Δt2), par intervention active de la personne surveillée à un système d'accusé de réception, lequel est relié au système électronique de surveillance,
3.) le système électronique est mis en état d'alarme et un signal d'alarme externe est lancé sous la forme d'une réception de contact par le système électronique de surveillance à au moins une personne auxiliaire externe,
de sorte que l'état d'alarme peut être terminé par au moins une personne auxiliaire externe contactée après réception d'une liaison vocale directe avec le système électronique de surveillance,
sachant que lors de l'accusé de réception réussi de la demande d'accusé de réception par la personne surveillée à l'intérieur de la période d'accusé de réception (Δt2), le système électronique de surveillance est programmé de telle sorte qu'aucun état d'alarme n'est déclenché selon 3.), la demande d'accusé de réception 2.) est arrêtée, l'enregistrement audio 1.) est arrêté, le fichier audio est effacé et le système électronique de surveillance est remis à l'état normal 0.).

2. Procédé de surveillance selon la revendication 1, sachant qu'après expiration non acquittée de la période d'accusé de réception (Δt2), l'état d'alarme selon 3.) est représenté sous la forme de la réception de contact par le système électronique de surveillance avec au moins une personne auxiliaire externe de telle sorte que
a) le fichier audio enregistré dans la période d'enregistrement (Δt1) est envoyé au moyen du système électronique de surveillance et d'un service de messagerie instantanée via Internet ou d'une application via Internet et/ou d'un réseau de téléphone mobile (GSM, GPRS, UMTS, LTE) à au moins une personne auxiliaire externe sous la forme d'un message vocal indirect,
et/ou
b) le système électronique de surveillance établit une liaison vocale directe entre au moins une personne auxiliaire externe et le système électronique de surveillance par le biais du service de messagerie instantanée via Internet ou l'application via Internet et/ou le réseau de téléphone mobile.

3. Procédé de surveillance selon la revendication 2, sachant que seul le fichier audio enregistré dans la période d'enregistrement (Δt1) est envoyé à au moins une personne auxiliaire externe par le système électronique de surveillance et
après écoute du fichier audio enregistré par au moins une personne auxiliaire externe faisant suite en cas de besoin, une liaison vocale directe recouplée est établie avec le système électronique de surveillance au moyen du service de messagerie instantanée via Internet ou d'un réseau de téléphone mobile (GSM, GPRS, UMTS, LTE) par au moins une personne auxiliaire externe avec le système électronique de surveillance au moyen duquel il est mis fin à l'état d'alarme du système électronique de surveillance et l'événement ou l'autre procédé est traité.

4. Procédé de surveillance selon la revendication 2, sachant qu'après envoi du fichier audio enregistré et/ou établissement d'une liaison vocale directe, l'inaccessibilité d'une première personne auxiliaire externe est confirmée en retour par le service de messagerie instantanée et/ou l'application et/ou le réseau de téléphone mobile, la liaison vocale indirecte et/ou directe avec une autre personne auxiliaire externe est essayée jusqu'à ce qu'une liaison vocale indirecte et/ou directe réussie se produise.

5. Procédé de surveillance selon la revendication 4, sachant qu'après réception réussie d'une liaison vocale directe d'au moins une personne auxiliaire externe avec la personne surveillée, des informations de fin d'alerte sont envoyées à la personne auxiliaire externe non atteinte au moyen du système électronique de surveillance par le biais du service de messagerie instantanée via Internet ou de l'application via Internet et/ou du réseau de téléphone mobile (GSM, GPRS, UMTS, LTE).

6. Procédé de surveillance selon l'une quelconque des revendications précédentes, sachant que le fichier audio enregistré est transformé en un fichier texte au moyen d'une conversion Parole-après-Texte et ce fichier texte est envoyé à la personne auxiliaire externe en même temps que le fichier audio au moyen du système électronique de surveillance et du service de messagerie instantanée via Internet ou de l'application via Internet et/ou du réseau de téléphone mobile (GSM, GPRS, UMTS, LTE).

7. Procédé de surveillance selon l'une quelconque des revendications précédentes, sachant que les signaux audio saisis sont analysés et traités ultérieurement dans le module audio avec des méthodes d'identification vocale.

8. Procédé de surveillance selon l'une quelconque des revendications précédentes, sachant que le système électronique de surveillance coopère avec au moins un autre système électronique de détection dans un autre secteur du local ou dans le local au sens d'une architecture Maître-Esclave, sachant que le système électronique de détection délivre au système électronique de surveillance des signaux audio et des données environnementales à partir de l'autre secteur du local ou de l'autre local.

9. Procédé de surveillance selon l'une quelconque des revendications précédentes, sachant qu'en plus des données environnementales sont enregistrées en continu dans le local au moyen d'autres capteurs, en particulier de capteurs de température, de capteurs de CO2, d'autres capteurs de gaz, de capteurs d'humidité, de capteurs de mouvement et/ou de caméras (y compris caméra à infrarouge et système de détection à technique du Temps de Vol) et sont transmises ultérieurement au système électronique de surveillance de telle sorte que les données environnementales sont transmises à la personne auxiliaire externe en tant que partie du signal d'alarme externe avec le fichier audio enregistré via le système électronique de surveillance.

10. Procédé de surveillance selon la revendication 9, sachant que des échantillons de comportement normaux de la personne surveillée sont déterminés au cours du temps à partir de la réception continue des données environnementales dans le système électronique de surveillance de telle sorte que des informations concernant un comportement divergent de la personne surveillée peuvent être transmises conjointement en fonction du temps avant l'événement lors de l'envoi du signal d'alarme externe.

11. Procédé de surveillance selon l'une quelconque des revendications précédentes, sachant que l'accusé de réception au système électronique de surveillance a lieu
a) mécaniquement, par exemple par une pression sur une touche ou un écran tactile
ou
b) acoustiquement, en énonçant un mot ou une phrase d'accusé de réception.

12. Procédé de surveillance selon la revendication 8, sachant que le système électronique de surveillance et/ou au moins un autre système électronique de détection sont alimentés en courant au moyen d'une connexion à un réseau de courant fixe.
